# EUROPÄISCHE PATENTANMELDUNG

(11) **EP 3 121 765 A1**
(43) Veröffentlichungstag der Anmeldung: **25.01.2017**
(21) Anmeldenummer: 16173862.0
(22) Anmeldetag: 10.06.2016
(51) Int. Cl.: G06K 9/62

(54) **VERFAHREN ZUR IDENTIFIKATION EINES COILS**

(30) Priorität: 21.07.2015 DE 102015213719
(71) Anmelder: Achenbach Buschhütten GmbH & Co. KG, 57223 Kreuztal (DE)
(72) Erfinder: Barten, Axel, 57223 Kreuztal (DE); Neukant, Rainer, 57223 Kreuztal (DE)
(74) Vertreter: advotec.

(57) **Zusammenfassung**

Verfahren zur Identifikation eines aus einer in einem Walzwerk hergestellten Materialbahn gewickelten Coils oder eines Materialbahnsegments des Coils, wobei die Identifikation durch Ermittlung individueller Bildmerkmale mittels eines bildverarbeitenden Verfahrens basierend auf einer Auswertung einer in einem bildgebenden Verfahren erzeugten Bilddatei mit Abbildung eines an einer stirnseitigen Oberfläche des Coils ausgebildeten Wickelspiegels erfolgt.

## Beschreibung

Die vorliegende Erfindung betrifft ein Verfahren zur Identifikation eines aus einer in einem Walzwerk hergestellten Materialbahn gewickelten Coils oder eines Materialbahnsegments des Coils.

Eine in einem Walzwerk hergestellte und zu einem Coil gewickelte Materialbahn weist in Abhängigkeit vom Walzverfahren definierte Materialparameter auf, die für die Eignung des Coils zur Weiterverarbeitung zu einem gewünschten Endprodukt entscheidend sind. Schon aus diesem Grund ist eine eindeutige Kennzeichnung des Coils notwendig als Voraussetzung dafür, dass das "richtige" Coil zur Weiterverarbeitung verwendet wird.

Insbesondere im Hinblick darauf, dass im Zuge der fortschreitenden Vernetzung von Walzwerkstandorten, die lokal unabhängig von Weiterverarbeitungsstandorten sind, ein Transport und Handling der Coils stattfindet, muss die Kennzeichnung verliersicher mit dem Coil verbunden sein und sollte mit möglichst geringem Aufwand anbringbar sein.

Zur Kennzeichnung von Coils ist es bereits bekannt, Coils mit einem Transponder zu versehen, der nachfolgend der Herstellung der Materialbahn im Walzwerk und Wicklung der Materialbahn zu einem Coil am Coil angebracht wird. Die Kennung des Transponders stellt dabei eine Verbindung zu einem Coil-Datensatz her, der quasi das Identifikationsdokuments des Coils bildet und über den Transponder, also mittelbar, dem Coil zugeordnet ist.

Mit der bekannten Art der Kennzeichnung ist neben der Notwendigkeit zur Bereitstellung der Transponder die Anwendung eines besonderen Verfahrens und die Verwendung einer geeigneten Vorrichtung zur Applikation der Transponder erforderlich. Darüber hinaus bedingt die äußere Anbringung der Transponder am Coil deren Gefährdung beim Handling oder macht besondere Schutzmaßnahmen erforderlich, um die jederzeitige Identifikation des Coils bzw. die eindeutige Zuordnung des Identifikationsdokumentes zum Coil zu ermöglichen.

Weiterhin sind Verfahren der Kennzeichnung eines Coils mittels Klarschrift, Barcode oder anderer graphischer Codes bekannt, bei denen die Markierung direkt auf das Coil oder auf einen mit dem Coil zu verbindenden Träger aufgebracht wird.

Sämtlichen der bekannten Verfahren ist gemeinsam, dass die in der Kennzeichnung enthaltene Information verloren geht, wenn das Coil einer Wärmebehandlung unterzogen und die Kennzeichnung zerstört wird oder ein mit der Kennzeichnung versehenes Coilsegment vom Coil abgetrennt wird.

Der vorliegenden Erfindung liegt daher die Aufgabe zugrunde, ein Verfahren zur Identifikation eines Coils vorzuschlagen, das besonders einfach durchführbar ist, sowie ein Identifikationsdokument vorzuschlagen, dessen eindeutige Zuordnung zum Coil durch äußere Einflüsse nicht gefährdet ist.

Zur Lösung dieser Aufgabe weist das erfindungsgemäße Verfahren die Merkmale des Anspruchs 1 auf.

Erfindungsgemäß erfolgt die Identifikation durch Ermittlung individueller Bildmerkmale mittels eines bildverarbeitenden Verfahrens basierend auf einer Auswertung einer in einem bildgebenden Verfahren erzeugten Bilddatei mit Abbildung eines an einer stirnseitigen Oberfläche des Coils ausgebildeten Wickelspiegels.

Die Erfindung basiert auf der Erkenntnis, dass jedes Coil einen individuellen Wickelspiegel aufweist, der gleichsam einem Fingerabdruck eines Menschen ein unverwechselbares, individualisierendes Merkmal des Coils darstellt. Der Wickelspiegel lässt sich somit als inhärente Kennzeichnung des Coils nutzen, so dass die Applikation einer äußeren Kennzeichnung des Coils überflüssig wird. Eine Bilddatei mit einer Abbildung des Wickelspiegels ermöglicht eine Dokumentation des Wickelspiegels sowie eine automatisierte Erkennung eines individuellen Wickelspiegels durch Anwendung eines bildverarbeitenden Verfahrens zur Auswertung der Bilddatei.

Besonders vorteilhaft ist es, wenn die Ermittlung individueller Bildmerkmale durch Vergleich einer ersten Abbildung eines Wickelspiegels an einer stirnseitigen Oberfläche eines ersten Coils mit einer zweiten Abbildung eines Wickelspiegels an einer stirnseitigen Oberfläche eines als Referenzcoil dienenden zweiten Coils erfolgt. Hierdurch wird es möglich, Coils voneinander zu unterscheiden oder gegebenenfalls die Übereinstimmung von Coils festzustellen. Obwohl der Wickelspiegel durch die gesamte Bahnlänge der zum Coil aufgewickelten Materialbahn bestimmt ist, ergeben bereits aufgewickelte Materialbahnsegmente unverwechselbare Wickelspiegelsegmente, die eindeutig identifizierbar sind.

Besonders vorteilhaft ist es, wenn zur Identifizierung eines Coils ein Vergleich einer Referenzabbildung des Wickelspiegels des ersten Coils mit einer Referenzabbildung des Wickelspiegels des zweiten Coils erfolgt, so dass nur Teilabbildungen der Wickelspiegel miteinander verglichen werden müssen.

Wenn das erste Coil mit dem zweiten Coil identisch ist, können besonders vorteilhaft durch Vergleich einer Referenzabbildung des Wickelspiegels des ersten Coils mit einer Referenzabbildung des Wickelspiegels des zweiten Coils fehlende Materialbahnsegmente definiert werden.

In der Praxis erweist sich dies als besonders vorteilhaft, da regelmäßig vor der Weiterverarbeitung von im Walzwerk hergestellter Coils in einer Verarbeitungseinrichtung mehr oder weniger lange Materialbahnsegmente von der zu dem Walzwerkcoil aufgewickelten Materialbahn entfernt werden, da die Materialbahnenden in der Regel nicht die gewünschten Qualitätsvorgaben erfüllen.

Die Ermittlung des fehlenden Materialbahnsegments erfordert keine physikalische Präsenz am Ort des Walzwerkes oder der Verarbeitungseinrichtung. Vielmehr ist es ausreichend, durch geeignete, vor Ort installierte bildgebende Einrichtungen Abbildungen des Wickelspiegels des Coils vor Abtrennung des Materialbahnsegments und nach Abtrennung des Materialbahnsegments zu erzeugen, so dass nach Übertragung der entsprechenden Bildinformationen die Auswertung, also der Vergleich der Abbildungen in einem bildverarbeitenden Verfahren an einem sowohl vom Walzwerk als auch von der Verarbeitungseinrichtung unabhängigen Ort erfolgen kann.

Wenn als Referenzabbildungen Abbildungen einer Teiloberfläche der Wickelspiegel verwendet werden, können die Bilddatenmengen und die Zeit für die Prozessierung der Bilddatenmengen vorteilhaft begrenzt werden.

Wenn zur Identifikation des Coils die Referenzabbildung des ersten Coils durch Rotation um eine Wickelachse des zweiten Coils mit der Referenzabbildung des zweiten Coils in eine Überdeckungslage gebracht wird, kann die Durchführung eines Identifizierungsvorgangs besonders schnell erfolgen.

Das erfindungsgemäße Identifikationsdokument zur Identifikation eines aus einer in einem Walzwerk hergestellten Materialbahn gewickelten Coils oder eines Materialbahnsegments des Coils weist zur Lösung der Aufgabe die Merkmale des Anspruchs 6 auf.

Erfindungsgemäß weist das Identifikationsdokument eine mittels eines bildgebenden Verfahrens erzeugte Bilddatei mit Abbildung eines an einer stirnseitigen Oberfläche des Walzwerkcoils ausgebildeten Wickelspiegels auf.

Nachfolgend wird eine bevorzugte Ausführungsform der Erfindung anhand der Zeichnung näher erläutert.

Es zeigen:
- **Fig. 1**: Ein Walzwerk mit einer im Walzwerk hergestellten und nachfolgend zu einem Walzwerkcoil gewickelten Materialbahn;
- **Fig. 2**: in einer Vergleichsdarstellung das im Walzwerk hergestellte Walzwerkcoil und das zur Weiterverarbeitung in der Weiterverarbeitungseinrichtung vorgesehene Verarbeitungscoil.

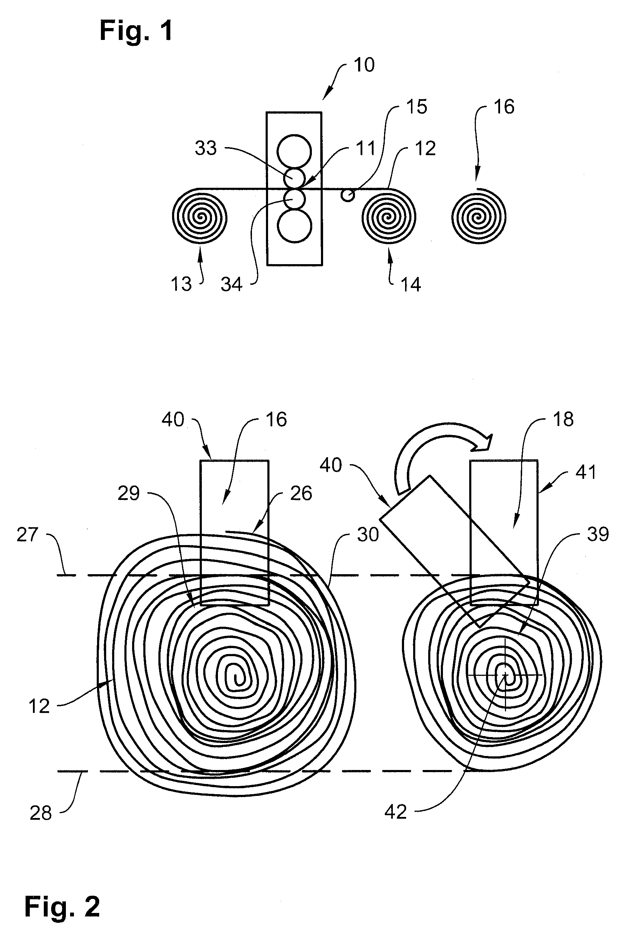

Fig. 1 zeigt ein Walzwerk 10 während der Herstellung einer durch einen Walzspalt 11 des Walzwerks 10 hindurchgeführten Materialbahn 12, die in einem Warmwalz- oder Kaltwalzverfahren in einer Mehrzahl von Walzvorgängen zwischen zwei Wicklern 13, 14 bewegt wird und hierzu wechselweise auf den Wicklern 13, 14 aufgewickelt und abgewickelt wird, wobei die Bahnführung entweder im Reversierbetrieb oder im Einwegbetrieb erfolgt, bei dem das Coil nach jedem Wickelvorgang zwischen den Wicklern 13, 14 umgesetzt wird. Während der Walzvorgänge erfolgt eine kontinuierliche Planheitsmessung mittels einer Planheitsmesseinrichtung 15. Die Walzvorgänge zwischen den beiden Wicklern 13, 14 werden so oft wiederholt, bis die gewünschte Ausbildung der Materialbahn mit einer definierten Bahnstärke erreicht ist.

Nach dem sogenannten letzten Stich, nach dem die Materialbahn auf einen der Wickler 13, 14, also beispielsweise im vorliegenden Fall dem rechten Wickler 14, aufgewickelt wird, erfolgt eine Entnahme eines im Walzwerk 10 gewickelten Coils 16, das nachfolgend an eine nicht dargestellte, ortsunabhängig von dem Walzwerk 10 installierte Verarbeitungseinrichtung, also beispielsweise eine Einrichtung zur Längsteilung der Materialbahn 12 in mehrere Materialbahnen mit definierter Breite, die etwa als Ausgangsmaterial zur Herstellung von Folienbeuteln verwendet werden, übergeben wird.

Da insbesondere im Anfangsbereich und Endbereichs des Coils 16 häufig Unregelmäßigkeiten auftreten, wird ein entsprechendes Materialbahnsegment 26 vor der Weiterverarbeitung der Materialbahn 12 in der Verarbeitungseinrichtung vom Coil 16 abgetrennt. Daher erfolgt eine, wie in Fig. 2 durch die Trennlinien 27, 28 angedeutet, entsprechende Kürzung der Materialbahn 12 beziehungsweise Umfangsreduzierung des Coils 16 zur Ausbildung eines Coils 18, das dieselbe Identität wie das Coil 16 aufweist, jedoch eine um das Materialbahnsegment 26 gekürzte Materialbahn aufweist.

Wie Fig. 2 zeigt, ergibt sich aufgrund des Wickelvorgangs bei der Ausbildung des Walzwerkcoils 16 ein für jedes Walzwerkcoil 16 individueller Wickelspiegel 29, der insbesondere durch Betriebsparameter bei der Herstellung der Materialbahn 12 im Walzwerk 10 und Materialparameter der Materialbahn 12 bestimmt ist. Der Wickelspiegel 29 ist in etwa vergleichbar mit einem Fingerabdruck, wobei der Verlauf und die Topographie eine Materialbahnlängskante 30 an der Stirnfläche des Walzwerkcoils 16 den Wickelspiegel 29 ausbildet, so dass eine in einem bildgebenden Verfahren erzeugte Abbildung des Wickelspiegels 29 als Bilddatei ein Identifikationsdokument zur Identifikation eines aus einer in einem Walzwerk 10 hergestellten Materialbahn 12 individuell ausgebildeten Coil 16 darstellt.

Da, wie Fig. 2 zeigt, auch nach Abtrennung des Materialbahnsegments 26 von dem Walzwerkcoil 16 ein Innenteil des Wickelspiegels 29 erhalten bleibt, ist die Abtrennung des Materialbahnanfangssegments 26 ohne Einfluss auf die Identifizierbarkeit des Coils. Fig. 2 demonstriert deutlich, dass das Coil 18, das einen Wickelspiegel 39 aufweist, hinsichtlich seiner Identität mit dem Coil 16 übereinstimmt.

Aufgrund eines Vergleichs des Wickelspiegels 29 des Coils 16 mit dem Wickelspiegel 39 des Coils 18 lässt sich aufgrund der dabei ermittelten Wicklungsanzahl des abgetrennten Materialbahnanfangssegments 26 nun ohne weiteres die Länge des abgetrennten Materialbahnsegments 26 ermitteln ohne eine tatsächliche Längenmessung und Positionsbestimmung durchzuführen.

Wie Fig.2 zeigt erfolgt zur Identifizierung eines Coils ein Vergleich einer Referenzabbildung 40 des Wickelspiegels 29 des ersten Coils 16 mit einer Referenzabbildung 41 des Wickelspiegel 39 des zweiten Coils, wobei im vorliegenden Fall als Referenzabbildungen 40, 41 Abbildungen einer Teiloberfläche der Wickelspiegel 29, 39 verwendet werden.

Bei einem Identifizierungsvorgang wird die Referenzabbildung 40 des ersten Coils 16 um eine Wickelachse 42 des zweiten Coils 18 rotiert bis bei einer Identität der Coils 16, 18 eine Übereinstimmung in einer Überdeckungslage mit der Referenzabbildung 41 des zweiten Coils 18 festgestellt wird.

In dem Fall, wenn das erste Coil 16 mit dem zweiten Coil 18 identisch ist, können durch Vergleich der Referenzabbildung 40 des Wickelspiegels 29 des ersten Coils 16 mit einer Referenzabbildung 41 des Wickelspiegel 39 des zweiten Coils fehlende Materialbahnsegmente 26 definiert werden.

## Patentansprüche

1. Verfahren zur Identifikation eines aus einer in einem Walzwerk hergestellten Materialbahn (12) gewickelten Coils (16) oder eines Materialbahnsegments (26) des Coils,
**dadurch gekennzeichnet,**
**dass** die Identifikation durch Ermittlung individueller Bildmerkmale mittels eines bildverarbeitenden Verfahrens basierend auf einer Auswertung einer in einem bildgebenden Verfahren erzeugten Bilddatei mit Abbildung eines an einer stirnseitigen Oberfläche des Coils ausgebildeten Wickelspiegels (29, 39) erfolgt.

2. Verfahren nach Anspruch 1,
**dadurch gekennzeichnet,**
**dass** die Ermittlung individueller Bildmerkmale durch Vergleich einer ersten Abbildung eines Wickelspiegels (29) an einer stirnseitigen Oberfläche eines ersten Coils (16) mit einer zweiten Abbildung eines Wickelspiegels (39) an einer stirnseitigen Oberfläche eines als Referenzcoil dienenden zweiten Coils (18) erfolgt.

3. Verfahren nach Anspruch 2,
**dadurch gekennzeichnet,**
**dass** zur Identifizierung eines Coils (16, 18) ein Vergleich einer Referenzabbildung (40) des Wickelspiegels (29) des ersten Coils (16) mit einer Referenzabbildung (41) des Wickelspiegel (39) des zweiten Coils (18) erfolgt.

4. Verfahren nach Anspruch 3,
**dadurch gekennzeichnet,**
**dass** in dem Fall, wenn das erste Coil (16) mit dem zweiten Coil (18) identisch ist, durch Vergleich einer Referenzabbildung (40) des Wickelspiegels (29) des ersten Coils mit einer Referenzabbildung (41) des Wickelspiegel (39) des zweiten Coils fehlende Materialbahnsegmente (26) definiert werden.

5. Verfahren nach Anspruch 3 oder 4,
**dadurch gekennzeichnet,**
**dass** als Referenzabbildungen (40, 41) Abbildungen einer Teiloberfläche der Wickelspiegel (29, 39) verwendet werden.

6. Verfahren nach Anspruch 5,
**dadurch gekennzeichnet,**
**dass** zur Identifikation des Coils (16, 18) die Referenzabbildung (40) des ersten Coils (16) durch Rotation um eine Wickelachse (42) des zweiten Coils (18) mit der Referenzabbildung (41) des zweiten Coils in eine Überdeckungslage gebracht wird.

7. Identifikationsdokument zur Identifkation eines aus einer in einem Walzwerk (10) hergestellten Materialbahn (12) gewickelten Coils (16) oder eines Materialbahnsegments (26) des Coils,
**dadurch gekennzeichnet,**
**dass** das Identifikationsdokument eine mittels eines bildgebenden Verfahrens erzeugte Bilddatei mit Abbildung eines an einer stirnseitigen Oberfläche des Coils (16, 18) ausgebildeten Wickelspiegels (29, 39) aufweist.
